# EUROPÄISCHE PATENTSCHRIFT

(11) **EP 0 491 753 B1**
(45) Veröffentlichungstag und Bekanntmachung des Hinweises auf die Patenterteilung: **05.01.1994**
(21) Anmeldenummer: 90913237.5
(22) Anmeldetag: 13.09.1990
(51) Int. Cl.: B65H 39/16, B29C 65/02

(54) **VORRICHTUNG ZUM ZUSAMMENTRAGEN VON FLÄCHIGEN BAHNEN ZU MEHRBLATTFORMULAREN, SOWIE ROLLEN- ODER STAPELCOLLATOR DAFÜR**
DEVICE FOR ASSEMBLING FLAT WEBS TO FORM MULTIPLE STATIONERY, AND ROLL OR PILE COLLATOR
DISPOSITIF POUR ASSEMBLER DES BANDES EN NAPPES AFIN D'OBTENIR DES FORMULAIRES MULTIFEUILLES, AINSI QU'ASSEMBLEUSE POUR ROULEAUX OU PILES DE PAPIER

(30) Priorität: 14.09.1989 DE 3930708
(43) Veröffentlichungstag der Anmeldung: 01.07.1992
(73) Patentinhaber: Ehret, Bernhard, D-79111 Freiburg (DE)
(72) Erfinder: Ehret, Bernhard, D-79111 Freiburg (DE)
(74) Vertreter: Müller, Hans, Dipl.-Ing.
(86) Internationale Anmeldenummer: DE9000704
(87) Internationale Veröffentlichungsnummer: WO9104216

(56) Entgegenhaltungen:
- EP-A- 0 051 099
- EP-A- 0 064 219
- EP-A- 0 145 118
- FR-A- 2 356 461

## Beschreibung

### TECHNISCHES GEBIET

Die Erfindung betrifft eine Vorrichtung zum Zusammentragen von flächigen Bahnen wie beispielsweise von Papierbahnen zu sogenannten Mehrblattformularen in Endlossätzen oder Einzelformularen. Die Erfindung betrifft auch einen für diese Vorrichtung besonders geeigneten Rollen- oder Stapelcollator. Endlossätze oder Einzelformulare bestehen aus mehreren, oftmals unterschiedlich dicken Papierbahnen. Die zu einem Satz bzw. einem Formular gehörenden mehreren Blätter sind miteinander zu einer Einheit verleimt oder durch Crimpen bzw. Flexotape verbunden.

Das Zusammentragen der einzelnen Papierbahnen und das Verleimen derselben sowie das anschließende Falzen der Mehrblattformulare erfolgt in der Druckindustrie vollautomatisch.

### STAND DER TECHNIK

Bekannt sind sogenannte Rollen- oder Stapelcollators für die Druckindustrie, in denen der Vorgang des Zusammentragens von mehreren Papierbahnen von entsprechend vielen aufgewickelten Papierbahnen zu sogenannten Mehrblattformularen und das anschließende Falzen derselben vollautomatisch erfolgt. Die Durchlaufgeschwindigkeit der Papierbahnen ist bei diesen Maschinen möglichst hoch. Eine aus wirtschaftlichen Gründen weitere Steigerung der Zusammentraggeschwindigkeit ist aus zwei Gründen nicht möglich. So bildet sich beim Zusammentragen zwischen den einzelnen Papierlagen ein Luftpolster, das bei zu großer Transportgeschwindigkeit der Papierbahnen nicht zwischen denselben rasch genug herausgedrückt werden kann, so daß die zusammengeführten Papierbahnen nicht mehr maßgerecht und gleichmäßig gefalzt werden können. Außerdem ist die Durchlaufgeschwindigkeit der Papierbahnen in diesen bekannten Maschinen so groß bzw. deren Verweilzeit in diesen Maschinen so klein, daß bei mit Kaltleim verbundenen Papierbahnen dieser Leim noch nicht ausreichend abgebunden hat, bevor die Bahnen die Falzstation bzw. den Querschneider erreichen, so daß beim Falzen durch die Verschiebung der Papierbahnen zueinander eine sogenannte Hütchenbildung bzw. eine Fächerbildung in den Mehrblattformularen auftritt.

Aus der EP 0 145 118 A1 ist eine Vorrichtung der gattungsgemäßen Art zum Zusammentragen von Papierbahnen zu sogenannten Mehrblattformularen in Endlossätzen oder Einzelformularen bekannt. Das Verbinden der einzelnen Bahnen erfolgt mittels Leimbahnen, die mit Hilfe einer Hochfrequenzeinrichtung getrocknet werden, so daß die jeweils an den Leimbahnen anliegenden Bahnen zusammenkleben. Die Hochfrequenzwellen wirken berührungslos auf die Bahnen ein. Daraus resultiert eine geringe Energiedichte pro Flächeneinheit und ein großer Flächenbedarf eines entsprechenden Gerätes.

### DARSTELLUNG DER ERFINDUNG

Ausgehend von diesem vorbekannten Stand der Technik liegt der Erfindung die Aufgabe zugrunde, eine leistungsstarke und trotzdem kostengünstige Vorrichtung zum Zusammentragen von flächigen Bahnen der eingangs genannten Art und einen entsprechend ausgerüsteten Rollen- oder Stapelcollator für die Druckindustrie anzugeben, so daß auch bei erhöhter Transportgeschwindigkeit der Papierbahnen ein korrektes Falzen derselben möglich wird, unabhängig davon, ob und wie die Mehrblattformulare verleimt sind.

Diese Erfindung ist für die eingangs genannte Vorriciitung zum Zusammentragen von flächigen Bahnen durch die Merkmale des Patentanspruchs 1 gegeben. Diese Vorrichtung ist dementsprechend gekennzeichnet durch eine Vakuumkammer, die einen Einlaßschlitz und einen in Transportrichtung der Bahnen nachgeordneten Auslaßschlitz aufweist, durch die die Bahnen in Transportrichtung hindurchgeführt werden können, und/oder durch eine Ultraschalleinrichtung mit einem mit Ultraschall anregbaren Hammer und einem Ambos, wobei die Bahnen mit ihrer Leimauftragsschicht zwischen dem Hammer und dem Ambos hindurchgeführt werden. Beide physikalischen Effekte - Vakuum und Ultraschall - jeweils für sich alleine oder in Kombination auf die zusammengeführten Bahnen einwirkend - lösen die der Erfindung zugrundeliegende Aufgabe.

Insbesondere beim Zusammentragen von Papierbahnen zu sogenannten Mehrblattformularen in Endlossätzen oder Einzelformularen, wie es in der Druckindustrie vorkommt, hat es sich als vorteilhaft herausgestellt, Vakuumkammer und/oder Ultraschalleinrichtung in einen ansich bekannten Rollen- oder Stapelcollator zu integrieren. Die Vakuumkammer und/oder die Ul-traschalleinrichtung sind entsprechend den Merkmalen des Patentanspruchs 11 in Transportrichtung vor der Falzstation des Collators angeordnet, und zwar entweder unmittelbar vor dieser Falzstation oder jeweils nach bzw. bei dem Zusammenführen von zwei Bahnen bzw. einer weiteren Bahn. Es können somit nur eine einzelne oder aber jeweils nach dem Zuführen von einer weiteren Bahn entsprechend viele Vakuumkammern und/oder Ultraschalleinrichtungen in einem derartigen Collator vorhanden sein.

Mit Hilfe einer Vakuumkammer lassen sich die zusammenzutragenden Papierbahnen extrem eng aufeinander positionieren, ohne daß ein das spätere Falzen erschwerendes Luftpolster zwischen den einzelnen Bahnen vorhanden wäre. Mit der Vakuumkammer läßt sich damit erreichen, daß sich die einzelnen Papierbahnen beim Falzen nicht gegenseitig in Transportrichtung verschieben. Dieser Effekt wird dadurch erreicht, daß innerhalb der Vakuumkammer das zwischen den Papierbahnen vorhandene Luftpolster abgesaugt wird, so daß nach Austritt der Papierbahnen aus der Vakuumkammer der außerhalb der Vakuumkammer vorhandene atmosphärische Druck die Papierbahnen extrem eng aneinanderpreßt, mit der Folge, daß sie sich praktisch nicht mehr gegenseitig verschieben können. Mit Hilfe der Ultraschalleinrichtung wird ein vergleichbarer Effekt dadurch erreicht, daß durch das Einwirken von Ultraschall der auf den Bahnen noch nicht klebende Leimauftrag in seiner Klebewirkung aktiviert wird.

Aus allgemein wirtschaftlichen Überlegungen heraus ist es sinnvoll, den Unterdruck in der Vakuumkammer nur in jeweils der Größe bereitzustellen, wie er für den jeweiligen Zusammentragevorgang erforderlich ist. So hat es sich als vorteilhaft herausgestellt, wenn die Größe des Unterdruckes einstellbar ist. Damit können dann auch empfindliche Selbstdurchschreibepapiere (SD-Papiere) ohne Schädigung derselben problemlos zusammengeführt werden. Je länger die Verweildauer der Papiere in der Vakuumkammer ist, umso geringer kann darüber hinaus der Unterdruck in der Kammer eingestellt werden. Sofern die Ultraschalleinrichtung vorhanden ist, kann in manchen Anwendungsfällen auf das Einwirken von Vakuum vollständig verzichtet werden.

In Anlehnung an den Effekt, daß beim Eintreffen von jeweils zwei übereinanderliegenden Bahnen in die Vakuumkammer das zwischen den Bahnen vorhandene Luftpolster dafür sorgt, daß sich die Bahnen in der Kammer voneinander wegbewegen, ist oberhalb der oberen Bahn eine Leiteinrichtung vorhanden, deren Abstand zu den Bahnen in Richtung zum Auslaßschlitz hin abnehmend ist. Nachdem nach Eintritt der Bahnen in die Kammer das Luftpolster zwischen den Bahnen zunächst ins Vakuum entweichen kann, wird durch die sich absenkende Leiteinrichtung ein sehr enges Zusammenführen der Papierbahnen vor Austritt der Bahnen aus der Vakuumkammer erreicht. Nach Austritt aus der Vakuumkammer werden die Bahnen durch den außerhalb der Vakuumkammer herrschenden atmosphärischen Normaldruck zusammengepreßt, so daß die aus mehreren Bahnen bestehenden Formulare vollkommen flach werden. Durch die Haftreibung zwischen den zusammengepreßten Bahnen wird eine gegenseitige Verschiebung derselben und damit die aus dem Stand der Technik nachteilige Hütchen- oder Fächerbildung verhindert.

Sowohl beispielsweise die Rollenbahnen, auf denen die Bahnen von unten abgestützt werden als auch die Rollenbahnen, die eine obere Begrenzung der oberen Bahnposition darstellen, sind so ausgebildet, daß die Luft schnell durch diese oberen und unteren Leiteinrichtungen hindurch abgesaugt werden kann.

Dies betrifft auch möglicherweise vorhandene seitliche Leiteinrichtungen. Die seitlichen Leiteinrichtungen, mit denen ein seitliches Verschieben der Bahnen verhindert werden soll, können eine einseitig oder beidseitig vorhandene Lochung der Papierbahn sein, in die zumindest im Einlaß- und Auslaßbereich der Vakuumkammer die Stifte eines Stiftbandes oder Stiftrades eingreifen. Damit können die Bahnen zumindest im Bereich des Einlaß- und Auslaßbereichs einer Vakuumkammer sowohl in seitlicher Richtung als auch in Transportrichtung gegenseitig unverschiebbar gehalten werden. Beim Aufblähen der oberen Papierbahn von der unteren Papierbahn im Bereich der Vakuumkammer kann dadurch keine Verschiebung der oberen Bahn von der unteren Bahn in Längsrichtung, d. h. in Transportrichtung der Bahnen erfolgen.

Weitere Vorteile und Merkmale der Erfindung ergeben sich durch die in den Ansprüchen ferner aufgeführten Merkmale sowie aus dem nachstehenden Ausführungsbeispiel.

### KURZE BESCHREIBUNG DER ZEICHNUNG

Die Erfindung wird im folgenden anhand des in der Zeichnung dargestellten Ausführungsbeispiels näher beschrieben und erläutert. Es zeigen:

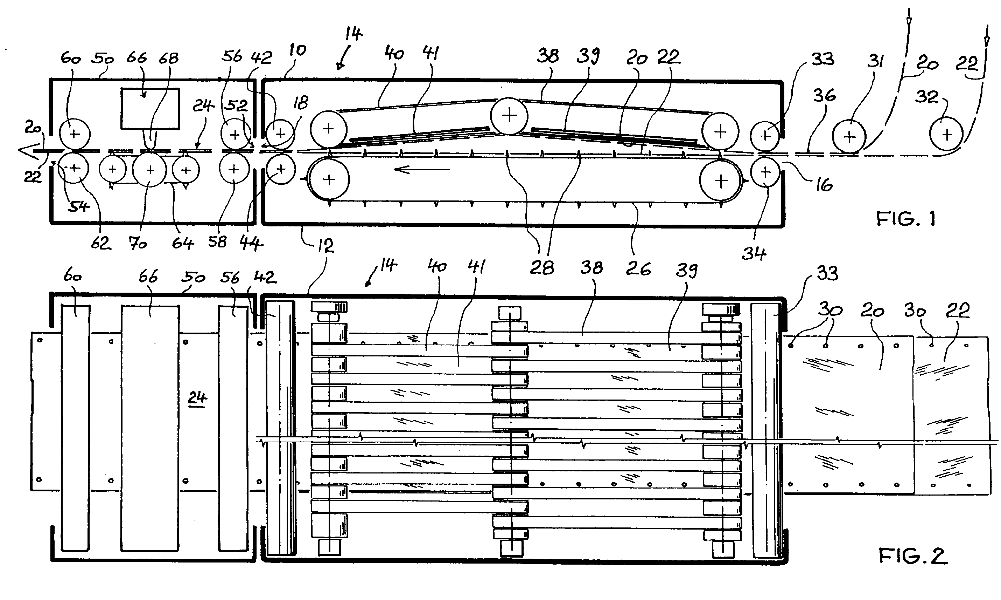

- Fig. 1: einen Längsschnitt durch eine Vakuumkammer mit nachgeschalteter weiterer Kammer mit einer Ultraschalleinrichtung nach der Erfindung und
- Fig. 2: eine Draufsicht durch die oben geöffneten Kammern nach Fig. 1.

### WEGE ZUR AUSFÜHRUNG DER ERFINDUNG

Eine ein Deckelteil 10 und ein Bodenteil 12 aufweisende Vakuumkammer 14 besitzt auf ihrer rechten Seite einen Einlaßschlitz 16 und auf ihrer gegenüberliegenden Seite einen Auslaßschlitz 18. Beide Schlitze 16, 18 dienen dazu, daß ein aus einer im Beispielsfall oberen Papierbahn 20 und einer unteren Papierbahn 22 bestehendes Mehrblattformular 24 - in der Zeichnung in etwa horizontal - in Transportrichtung 25, durch die Vakuumkammer 14 hindurchgeführt werden kann.

Beim Durchführen durch die Vakuumkammer 14 liegt die untere Papierbahn 22 auf unteren Rollenbändern auf. Von diesen Rollenbändern ist ein seitliches Rollenband 26 dargestellt, das als Stiftband ausgebildet ist. Die einzelnen Stifte 28 können dabei in eine Lochung 30, die seitlich in den beiden Papierbahnen 20, 22 vorhanden ist, eingreifen.

Die Papierbahnen 20 bzw. 22 kommen jeweils von nicht dargestellten Papierrollen und werden über jeweils eine Umlenkrolle 31, 32 in horizontaler Richtung umgelenkt. Beim Eintreffen in die Vakuumkammer liegen von oben und unten jeweils eine obere bzw. untere Führungs- und Abdichtungsrolle 33, 34 an ihnen an. Diese beiden Rollen 33, 34 dienen nicht nur zum Führen der beiden Papierbahnen 20, 22, sondern auch zum Abdichten des Einlaßschlitzes 16, damit der in der Vakuumkammer 14 herrschende Unterdruck sich durch den Einlaßschlitz 16 hindurch möglichst nur gering abbaut.

Beim Zusammenführen der beiden Bahnen 20, 22 im Bereich vor der Vakuumkammer 14, hat sich im dortigen Bereich 36 zwischen den beiden Bahnen ein Luftpolster gebildet. Nach Eintreffen dieses Bereiches 36 in die Vakuumkammer, bläht sich das Luftpolster auf, so daß die obere Papierbahn 20 von der unteren Papierbahn 22 nach oben wegbewegt wird. Die untere Papierbahn 22 liegt dabei auf den unteren Rollenbändern auf. Die obere Papierbahn wird von oben durch obere Rollenbänder 38 und dazwischen angeordneten Leitblechen 39 begrenzt, die in Transportrichtung schräg ansteigend oberhalb der Bahnen vorhanden sind.

Das Aufblähen, d. h. das voneinander Lösen der beiden Papierbahnen 20, 22 im Bereich der Rollenbänder 38 ermöglicht ein sehr schnelles Abführen dieser Luft in der Vakuumkammer 14.

Im - in Transportrichtung 25 - Anschluß an die Rollenbänder 38 sind weitere Rollenbänder 40 mit wiederum dazwischen angeordneten Leitblechen 41 vorhanden, die in Transportrichtung 25 abfallend angeordnet sind. Die Rollenbänder 38, 40 und die Leitbleche 39, 41 sind im Querschnitt damit etwa dachförmig angeordnet. Mit den Rollenbändern 40 und den Leitblechen 41 wird die obere Papierbahn wieder dicht auf die untere Papierbahn 22 zubewegt, so daß die beiden Bahnen 20, 22 im Bereich des Auslaßschlitzes 18 extrem dicht aufeinanderliegen. Im Bereich des Auslaßschlitzes 18 sind wieder eine obere und untere Führungs- und Abdichtungsrolle 42, 44 angeordnet, die in ihrer Funktion den Rollen 33, 34 im Bereich des Einlaßschlitzes 16 entsprechen.

Nach Austritt der Bahnen 20, 22 aus der Vakuumkammer 14 wirkt auf sie der außerhalb der Kammer 14 vorhandene Luftdruck. Dieser bewirkt ein starkes Zusammenpressen der Bahnen, so daß zwischen ihnen außerhalb der Vakuumkammer praktisch keine Luft vorhanden ist. Ein Einströmen von Luft zwischen die Bahnen kann gegebenenfalls höchstens im seitlichen Längsrandbereich der Bahnen erfolgen. Dadurch bleiben die beiden Bahnen aber im übrigen Querschnittsbereich vollständig aneinandergepreßt, so daß sich die Bahnen insgesamt problemlos in einer nachgeordneten Falzstation korrekt und einwandfrei falzen lassen; ein gegenseitiges Verschieben der einzelnen Papierbahnen ist durch das Aneinanderhaften der Bahnen praktisch nicht möglich. Durch Einflußnahme auf die Größe des jeweils in der Vakuumkammer herrschenden Unterdruckes kann die zwischen den Bahnen herrschende Reibungskraft dabei beliebig groß eingestellt werden.

Im vorliegenden Beispielsfall wurden die beiden Bahnen 20, 22 nach Verlassen der Vakuumkammer 14 nicht unmittelbar einer Falzstation zugeführt, sondern sie werden vorher noch durch eine im - in Transportrichtung 25 - Anschluß an die Vakuumkammer 14 vorhandene weitere Kammer 50 hindurchgeführt. Auch diese Kammer 50 weist dementsprechend einen Einlaßschlitz 52 und einen Auslaßschlitz 54 für die Bahnen 20, 22 auf. Zur ausreichenden Führung der Bahnen 20, 22 in der Kammer 50 sind jeweils von innen, nahe bei den Schlitzen 52, 54 jeweils eine obere und untere Führungsrolle 56, 58 bzw. 60, 62 vorhanden. Im dazwischenliegenden Kammerbereich liegen die Bahnen 20, 22 auf zwei jeweils seitlich vorhandenen endlos umlaufenden Rollenbändern auf, von denen ein einzelnes Rollenband 64 dargestellt ist, das als Stiftband ausgebildet ist.

Oberhalb der Bahnen 20, 22 ist innerhalb der Kammer 50 eine Ultraschalleinrichtung 66 vorhanden, mit der die auf den Bahnen 20, 22 aufgetragenen Leimauftragsschichten ultraschallbehandelt werden können. Die Mehrfachbahnen laufen zwischen einem mit Ultraschall angeregten Hammer 68 und einer darunterliegenden Amboswelle 70 hindurch, und der noch nicht ausgehärtete Leim wird dabei durch die hohe Energiedichte aktiviert. Der Arbeitsspalt zwischen Hammer 68 und meist mit Rändelmuster versehenen Amboswelle 70 ist fein einstellbar ausgeführt. Als Folge davon kleben die beiden dicht aufeinanderliegenden Bahnen innerhalb der Kammer 50 fest aneinander. Nach Austritt aus der Kammer 50 können die Bahnen 20, 22 dann problemlos exakt gefalzt werden.

Je nach Art und Festigkeit der zusammenzuführenden Papierbahnen und der gewünschten Maschinengeschwindigkeit, d. h. Transportgeschwindigkeit der Bahnen, hängt beispielsweise die Größe des in der Vakuumkammer herrschenden Unterdruckes bzw. die Stärke der in der Kammer 50 wirkenden Ultraschallbehandlung ganz wesentlich von der Länge dieser Kammern 14, 50 ab, d. h. von der Verweildauer der Papierbahnen in der jeweiligen Kammer 14, 50. Es ist daher sowohl die Größe des in der Vakuumkammer vorherrschenden Unterdruckes als auch die Schalldauer und Schallintensität so groß zu wählen und die Kammern so groß auszubilden, daß die Verweildauer der Papierbahnen in den Kammern groß genug ist, um zu ermöglichen, daß die gesamte Luft zwischen den Papierbahnen abgesaugt und die Leimauftragsschichten aktiviert werden können. Nachdem in aller Regel die beiden Kammern in ihrer Größe fest vorgegeben sein werden, wird eine Anpassung an die unterschiedlich großen Transportgeschwindigkeiten von unterschiedlichen Papierbahnen beispielsweise durch eine geschwindigkeitsabhängige Regelung der Vakuumstärke sowie der Schalldauer und Schallintensität erreicht werden können.

Sofern mehrere Vakuumkammern und gegebenenfalls auch mehrere Ultraschalleinrichtungen hintereinander angeordnet werden, was wie eingangs beschrieben beim Zusammenführen von zusätzlichen, unterschiedlich starken Papierbahnen sinnvoll sein kann, kann der Unterdruck in den einzelnen Vakuumkammern sowie die Schalldauer und Schallintensität entsprechend den unterschiedlichen Papierbahnen auch unterschiedlich gewählt werden.

Die in der Vakuumkammer vorhandenen Begrenzungseinrichtungen wie beispielsweise Rollenbänder oder Leit-"Bleche" können auch als Bürsten oder Flächen aus Metall oder Kunststoff ausgebildet sein. Ferner ist es aus Wartungs- bzw. Reparaturgründen sinnvoll, die beiden Kammern 14, 50 beispielsweise - insbesondere in der Papierebene - aufklappbar auszubilden oder auf andere Weise dafür zu sorgen, daß der jeweilige Deckelteil vom jeweiligen Bodenteil einfach wegbewegt bzw. getrennt werden kann.

Weiterhin ist es vorteilhaft, die seitlichen Leit- bzw. Stiftbänder zur Anpassung an unterschiedliche Papierbahnbreiten seitlich verschieb- und einstellbar auszuführen.

Es hat sich weiterhin als vorteilhaft erwiesen, in der Vakuumkammer 14 den Winkel zwischen den unteren Leitrollen und den auf- und absteigenden Leitrollen 38, 39 und 40, 41 einstellbar zu machen.

Im vorliegenden Ausführungsbeispiel wirkt auf die beiden Bahnen 20, 22 der kombinatorische Effekt eines Vakuums und einer Beschallung. Es ist allerdings auch möglich, auf einen dieser beiden Effekte mehr oder weniger vollständig zu verzichten.

## Patentansprüche

1. Vorrichtung zum Zusammentragen von flächigen Bahnen (20,22) wie beispielsweise von Papierbahnen zu sogenannten Mehrblattformularen in Endlossätzen oder Einzelformularen, wobei diese Vorrichtung zum Zusammentragen und Längs- oder Querverleimen der Bahnen einer Falzstation bzw. Querschneidestation für diese Bahnen in Transportrichtung der Bahnen vorgelagert ist,
**gekennzeichnet durch**
- eine Vakuumkammer (14) mit einem Einlaßschlitz (16) und einem in Transportrichtung der Bahnen (20, 22) nachgeordneten Auslaßschlitz (18), durch die die Bahnen (20, 22) in Transportrichtung (25) hindurchführbar sind, und/oder
- eine Ultraschalleinrichtung (66) mit einem mit Ultraschall anregbaren Hammer (68) und einem Ambos (70), wobei die Bahnen (20, 22) mit ihrer Leimauftragsschicht zwischen dem Hammer (68) und dem Ambos (70) hindurchführbar sind.

2. Vorrichtung nach Anspruch 1,
**dadurch gekennzeichnet,** daß
der Ambos (70) eine Welle ist, die insbesondere mit einem Rändelmuster versehen ist.

3. Vorrichtung nach Anspruch 1 oder 2,
**dadurch gekennzeichnet,** daß
der Spalt zwischen Hammer (68) und Ambos (70) fein einstellbar ist.

4. Vorrichtung nach Anspruch 1,
**dadurch gekennzeichnet,** daß
die Größe des Unterdruckes in der Vakuumkammer (14) beliebig einstellbar ist.

5. Vorrichtung nach Anspruch 1,
**dadurch gekennzeichnet,** daß
oberhalb der obersten Bahn (20) eine obere Leiteinrichtung (40, 41) vorhanden ist, deren Abstand zu den Bahnen (22) in Richtung zum Auslaßschlitz (18) hin abnehmend ist.

6. Vorrichtung nach Anspruch 5,
**dadurch gekennzeichnet,** daß
die obere Leiteinrichtung (38, 39, 40, 41) etwa dachförmig derart angeordnet ist, ihr Abstand zu den Bahnen in Richtung im Bereich des Einlaß- und Auslaßschlitzes einen kleineren Wert aufweist als im dazwischenliegenden, mittleren Bereich der Vakuumkammer.

7. Vorrichtung nach Anspruch 6,
**dadurch gekennzeichnet,** daß
die obere Leiteinrichtung durch Rollenbänder (38, 40) und Leitbleche (39, 41) gebildet wird, die in Transportrichtung (25) der Bahnen auf- bzw. absteigend angeordnet sind.

8. Vorrichtung nach Anspruch 1,
**dadurch gekennzeichnet,** daß
eine zur Transportrichtung (25) seitliche Leiteinrichtung für die Bahnen vorhanden ist.

9. Vorrichtung nach Anspruch 8,
**dadurch gekennzeichnet,** daß
die seitliche Leiteinrichtung eine in Transportrichtung (25) verlaufende ein- oder zweireihige Lochung (30) der Bahnen (20, 22) enthält, in die die Stifte (28) eines Stiftbandes (26) oder Stiftrades eingreifbar sind.

10. Vorrichtung nach einem der Ansprüche 1 bis 9,
**dadurch gekennzeichnet,** daß
- die Ultraschalleinrichtung (66, 68, 70) in einer Kammer (50) vorhanden ist, durch die die Bahnen (20, 22) in Transportrichtung (25) hindurchführbar sind,
- die Ultraschalleinrichtung (66, 68, 70) bei Vorhandensein einer Vakuumkammer (14) derselben in Transportrichtung (25) nachgeordnet ist.

11. Rollen- oder Stapelcollator für die Druckindustrie,
**dadurch gekennzeichnet,** daß
- in Transportrichtung (25) vor der Falzstation zumindest eine Vakuumkammer (14) und/oder eine Einrichtung (66) zum Beaufschlagen der Bahnen (20, 22) mit Ultraschall gemäß den vorstehenden Ansprüchen vorhanden ist, und zwar
-- entweder unmittelbar vor dieser Falzstation oder
-- jeweils nach bzw. bei dem Zusammenführen von zwei Bahnen bzw. einer weiteren Bahn zu bereits zusammengeführten mehreren Bahnen, und
- die Ultraschalleinrichtung (66, 68, 70) bei Vorhandensein einer Vakuumkammer (14) derselben in Transportrichtung (25) nachgeordnet ist.

## Claims

1. Device for assembling flat webs (20, 22), such as for example webs of paper, to form so-called multi-sheet forms in continuous sets or individual forms, this device for the assembling and longitudinal or transverse gluing of the webs being preceded in the transporting direction of the webs by a folding station or cross-cutting station for these webs, characterized by
- a vacuum chamber (14) with an inlet slit (16) and an outlet slit (18), which is arranged downstream in the transporting direction of the webs (20, 22) and through which the webs (20, 22) can be passed through in the transporting direction (25), and/or
- an ultrasonic device (66) with a hammer (68), which can be excited by ultrasound, and an anvil (70), the webs (20, 22) with their layer of applied glue being able to be passed through between the hammer (68) and the anvil (70).

2. Device according to Claim 1, characterized in that the anvil (70) is a shaft which is provided in particular with a knurled pattern.

3. Device according to Claim 1 or 2, characterized in that the gap between hammer (68) and anvil (70) is finely adjustable.

4. Device according to Claim 1, characterized in that the level of the subatmospheric pressure in the vacuum chamber (14) can be adjusted as desired.

5. Device according to Claim 1, characterized in that above the uppermost web (20) there is an upper directing device (40, 41), the distance of which from the webs (22) decreases in the direction of the outlet slit (18).

6. Device according to Claim 5, characterized in that the upper directing device (38, 39, 40, 41) is arranged approximately in the shape of a roof, its distance from the webs in the direction in the region of the inlet slit and outlet slit has a smaller value than in the central region lying in between of the vacuum chamber.

7. Device according to Claim 6, characterized in that the upper directing device is formed by roller belts (38, 40) and directing plates (39, 41), which are arranged respectively rising and descending in the transporting direction (25) of the webs.

8. Device according to Claim 1, characterized in that there is a directing device for the webs to the sides of the transporting direction (25).

9. Device according to Claim 8, characterized in that the lateral directing device includes a one-row or two-row perforation (30) of the webs (20, 22), which runs in the transporting direction (25) and into which the pins (28) of a pin belt (26) or pin wheel are able to engage.

10. Device according to one of Claims 1 to 9, characterized in that
- the ultrasonic device (66, 68, 70) is in a chamber (50) through which the webs (20, 22) are able to be passed in the transporting direction (25),
- if there is a vacuum chamber (14), the ultrasonic device (66, 68, 70) is arranged downstream of the latter in the transporting direction (25).

11. Roll or pile collator for the printing industry, characterized in that
- upstream of the folding station, in the transporting direction (25), there is at least one vacuum chamber (14) and/or a device (66) for impinging the webs (20, 22) with ultrasound according to the preceding claims, to be precise
-- either directly ahead of this folding station or
-- respectively after or at the bringing together of two webs or of a further web to a plurality of webs already brought together, and
- if there is a vacuum chamber (14), the ultrasonic device (66, 68, 70) is arranged downstream of the latter in the transporting direction (25).

## Revendications

1. Dispositif pour assembler des bandes plates (20, 22), comme par exemple des bandes de papier, pour former ce que l'on appelle des liasses de formulaires sous la forme de jeux sans fin ou de formulaires individuels, ce dispositif d'assemblage et de collage longitudinal ou transversal des bandes étant installé, dans la direction de transport des bandes, en amont d'un poste de pliage ou d'un poste de coupe en sens travers de ces bandes, respectivement, caractérisé par :
- une chambre à vide (14) qui comprend une fente d'entrée (16) et une fente de sortie (18) disposée en aval dans la direction de transport des bandes (20, 22), et à travers laquelle on peut faire passer les bandes (20, 22) dans la direction de transport (25), et/ou :
- un dispositif à ultrasons (66) comprenant un marteau (68) qui peut être excité par des ultrasons, ainsi qu'une enclume (70), les bandes (20, 22) pourvues de la couche de colle qui leur a été appliquée pouvant être amenées à passer entre le marteau (68) et l'enclume (70).

2. Dispositif selon la revendication 1, caractérisé par le fait que l'enclume (70) est un arbre qui est en particulier muni d'un motif moleté.

3. Dispositif selon la revendication 1 ou 2, caractérisé par le fait que la fente qui est présente entre le marteau (68) et l'enclume (70) peut être soumise à un réglage fin.

4. Dispositif selon la revendication 1, caractérisé par le fait que la valeur de la dépression dans la chambre à vide (14) peut être réglée à volonté.

5. Dispositif selon la revendication 1, caractérisé par le fait qu'un dispositif de guidage supérieur (40, 41) est présent au-dessus de la bande supérieure (20), et que sa distance par rapport aux bandes (22) décroît dans la direction de la fente de sortie (18).

6. Dispositif selon la revendication 5, caractérisé par le fait que le dispositif de guidage supérieur (38, 39, 40, 41) est disposé à peu près en forme de toit d'une manière telle que sa distance par rapport aux bandes dans la région des fentes d'entrée et de sortie présente une valeur inférieure à celle de la région centrale de la chambre à vide qui est située entre ces fentes.

7. Dispositif selon la revendication 6, caractérisé par le fait que le dispositif de guidage supérieur est constitué par des bandes transporteuses (38, 40) et par des tôles de guidage (39, 41) qui sont disposées en montant et en descendant, respectivement, dans la direction de transport (25) des bandes.

8. Dispositif selon la revendication 1, caractérisé par le fait qu'un dispositif de guidage destiné aux bandes est présent latéralement par rapport à la direction de transport (25).

9. Dispositif selon la revendication 8, caractérisé par le fait que le dispositif de guidage latéral comprend une ou deux séries de perforations (30) qui sont ménagées dans les bandes (20, 22), qui s'étendent dans la direction de transport (25) et dans lesquelles peuvent pénétrer les picots (28) d'une bande à picots (26) ou d'une roue à picots.

10. Dispositif selon l'une des revendications 1 à 9, caractérisé par le fait que :
- le dispositif à ultrasons (66, 68, 70) est présent dans une chambre (50) à travers laquelle on peut faire passer les bandes (20, 22) dans la direction de transport (25),
- lorsqu'une chambre à vide (14) est présente, le dispositif à ultrasons (66, 68, 70) est disposé en aval de celle-ci dans la direction de transport (25).

11. Assembleuse pour rouleaux ou pour piles destinée aux industries du livre, caractérisée par :
- la présence, en amont du poste de pliage dans la direction de transport (25), au moins d'une chambre à vide (14) et/ou d'un dispositif (66) destiné à soumettre les bandes (20, 22) à des ultrasons, selon les revendications précédentes, et ce :
-- soit immédiatement avant ce poste de pliage, ou :
-- à chaque fois après la réunion de deux bandes ou d'une autre bande à plusieurs bandes déjà réunies, respectivement, ou lors de cette réunion, respectivement, et :
- par le fait que, lorsqu'une chambre à vide (14) est présente, le dispositif à ultrasons (66, 68, 70) est disposé en aval de celle-ci dans la direction de transport (25).
